**Europäisches Patentamt**

**European Patent Office**

**Office européen des brevets**

(19)

(11) Veröffentlichungsnummer: **0 075 933**
**A1**

(12) **EUROPÄISCHE PATENTANMELDUNG**

(21) Anmeldenummer: **82108986.9**

(22) Anmeldetag: **29.09.82**

(51) Int. Cl.³: **A 22 C 13/00**
**B 65 B 11/58**

(30) Priorität: **29.09.81 DE 3138685**

(43) Veröffentlichungstag der Anmeldung:
**06.04.83 Patentblatt 83/14**

(84) Benannte Vertragsstaaten:
**AT BE CH DE FR GB IT LI NL SE**

(71) Anmelder: **Kollross, Günter**
**Am Wallerstädter Weg 20**
**D-6080 Gross Gerau-Dornheim(DE)**

(72) Erfinder: **Kollross, Günter**
**Am Wallerstädter Weg 20**
**D-6080 Gross Gerau-Dornheim(DE)**

(74) Vertreter: **Beyer, Werner, Dipl.-Ing. et al,**
**Staufenstrasse 36, II P.O. Box 174109**
**D-6000 Frankfurt/Main(DE)**

(54) Verfahren und Vorrichtung zum Verpacken langgestreckter zylindrischer Gegenstände, insbesondere Wursthüllenraupen in schlauchförmiges, elastisch aufweitbares Verpackungsmaterial.

(57) Das Verpacken langgestreckter zylindrischer Gegenstände wie insbesondere Wursthüllenraupen in schlauchförmiges, elastisch aufweitbares Verpackungsmaterial erfolgt erfindungsgemäß dadurch, daß in fortegesetzter zyklischer Wiederholung ein Abschnitt des Verpackungsmaterials auf einen größeren Durchmesser als die zu verpackenden Gegenstände aufgeweitet wird. Daraufhin wird der zu verpackende Gegenstand durch das Verpackungsmaterial unter Erfassen eines unausgeweiteten Endabschnitts und anschliessendes Abziehen des aufgeweiteten Materialabschnitts aus dem Aufweitbereich relativ bis zur vollständigen Einhüllung des Gegenstandes hindurchbewegt. Im Verlaufe eines jeden solchen Verfahrenszyklus wird das Verpackungsmaterial in der für die Verpackung erforderlichen Länge vom Materialstrang abgetrennt. Eine Vorrichtung zur Durchführung des Verfahrens wird gleichfalls vorgeschlagen.

./...

Fig. 1

BEZEICHNUNG
siehe Titelseite

Beschreibung

Die Erfindung betrifft ein Verfahren zum Verpacken langgestreckter zylindrischer Gegenstände, insbesondere Wursthüllenraupen, in schlauchförmiges, elastisch aufweitbares Verpackungsmaterial, das im ungeweiteten Zustand einen kleineren Durchmesser als die zu verpackenden Gegenstände aufweist und als Strang von beliebiger Länge zur Verfügung steht, sowie eine Vorrichtung zur Durchführung des von der Erfindung betroffenen Verfahrens.

Das Verlangen, langgestreckte, zylindrische Gegenstände in schlauchförmiges Verpackungsmaterial einzuschließen, besteht in besonderem Maße bei der Belieferung der fleischverarbeitenden Industrie mit konfektioniertem Wursthüllenmaterial zur Weiterverarbeitung auf Füllautomaten. Das von den Schlauchfabriken als Kunstprodukt hergestellte Hüllenmaterial wird in Längen von mehreren 1o Metern zu verhältnismäßig kurzen Schlauchraupen gerafft, die beim Wurststeller auf das Füllrohr der Füllmaschine aufgeschoben und dann unter fortlaufendem Abziehen des Materials von der Raupe mit Wurstbrät gefüllt werden. Sowohl beim Raffen als auch beim Füllen muß das Hüllenmaterial zur Erlangung der erforderlichen Geschmeidigkeit einen ziemlich hohen Feuchtigkeitsgehalt aufweisen, der bei vielen Materialarten das rapide Anwachsen von Bakterien begünstigt. Für solche Materialien ist deshalb zur Vermeidung der bisher üblichen Zwischentrocknung eine sterile Verpackung nach bakterizider Behandlung im Anschluß an die Schlauchherstellung erwünscht. Daneben besteht das Bedürfnis, die Schlauchraupen wirksam an einem selbsttätigen Öffnen ihrer Falten beim Transport und der Lagerung zu hindern, was auch mit Netzverpackungen möglich ist. Generell aber sollte das Verpackungsmaterial die Raupen so eng umschließen, daß bei der Verarbeitung auf dem Füllautomat das Abziehen des Materials genau Falte für Falte erfolgt und

- 2 -

dadurch Stauungen vor der sogenannten Darmbremse, durch die
das Hüllenmaterial am Füllstutzenende hindurchläuft, vermieden werden. Dazu ist es aber nötig, daß das Verpackungsmaterial elastisch aufweitbar ist und im ungeweiteten Zustand einen kleineren Durchmesser als die zu verpackenden
Schlauchraupen aufweist. Das Aufbringen eines solchen Verpackungsmaterials auf die zu verpackenden Schlauchraupen
konnte bisher nicht befriedigend gelöst werden.

Aufgabe der Erfindung ist es deshalb, ein Verfahren der
eingangs genannten Art sowie eine zur Durchführung desselben geeignete Vorrichtung zu schaffen, die schnell und
dennoch beschädigungsfrei das Verpacken langgestreckter
zylindrischer Gegenstände wie insbesondere Wursthüllenraupen
in elastisch aufweitbares Schlauchmaterial von kleinerem
Ruhedurchmesser als die zu verpackenden Gegenstände gestatten.

Das erfindungsgemäße Verfahren zur Lösung dieser Aufgabe
zeichnet sich dadurch aus, daß in fortgesetzter zyklischer
Wiederholung ein mindestens der Verpackungslänge eines
Gegenstandes entsprechender Abschnitt des Verpackungsmaterials
auf einen größeren Durchmesser als die zu verpackenden Gegenstände aufgeweitet wird und darauf ein solcher Gegenstand
unter Erfassen eines unaufgeweiteten Endabschnitts des Verpackungsmaterials und anschließendes Abziehen des aufgeweiteten Materialabschnitts aus dem Aufweitbereich relativ durch
das Verpackungsmaterial bis zur vollständigen Einhüllung
des Gegenstandes hindurchbewegt wird, wobei außerdem im
Verlaufe eines jeden solchen Verfahrenszyklus das Verpackungsmaterial in der für die Verpackung des Gegenstandes
erforderlichen Länge vom Materialstrang abgetrennt wird.

Die Aufweitung des Verpackungsmaterials kann mechanisch
oder pneumatisch erfolgen. Dabei ist es, sofern Schlauchraupen, insbesondere Wursthüllenraupen verpackt werden

- 3 -

sollen, in jedem Falle vorteilhaft, die Schlauchraupen vor
dem Einhüllen in das Verpackungsmaterial axial zusammenzupressen.

Eine Vorrichtung zur Durchführung des Verfahrens mit
mechanischer Aufweitung des Verpackungsmaterials zeichnet
sich vorzugsweise aus durch eine Trageinrichtung für jeweils einen zu verpackenden Gegenstand, eine Anzahl ringsum
die Trageinrichtung angeordneter und relativ zu dieser in
Längsrichtung des Gegenstandes bewegbarer langgestreckter
Glieder für einen zum Verpacken erforderlichen Materialabschnitt, einen die langgestreckten Glieder an den einen
Enden tragenden Spreizmechanismus zum radialen Auseinanderspreizen der langgestreckten Glieder sowie Einrichtungen zum
Aufziehen des Verpackungsmaterials auf die ungespreizten
Glieder und zum Abschneiden des aufgezogenen Materialabschnitts vom Materialstrang nach dem Spreizen.

Demgegenüber zeichnet sich eine Vorrichtung zur Durchführung
des erfindungsgemäßen Verfahrens mit pneumatischer Aufweitung des Verpackungsmaterials vorzugsweise aus durch ein
das Verpackungsamterial nach Durchlaufen eines Quetschwalzenpaares über sich hinwegführendes, über das Verpackungsmaterial von außen zentriertes und gegen Axialbewegung in
Ablaufrichtung des Verpackungsmaterials gehaltenes Führungsrohr von geringfügig größerem Innendurchmesser als die zu
verpackenden Gegenstände und ein jeweils einen zu verpackenden Gegenstand tragendes, in das Führungsrohr einfahrbares
Tragrohr, durch welches während des Einfahrens in das
Führungsrohr Druckluft in solchem Ausmaß in das Innere
des sich mit seinem Öffnungsende dichtend gegen die Stirnseite des zu verpackenden Gegenstandes anliegenden Verpackungsmaterials eingeblasen wird, daß sich dieses über
den Außendurchmesser des Führungsrohres hinaus ausdehnt
und beim weiteren Einfahren des Raffrohres von selbst über

- 4 -

die Vorderkante des Führungsrohrs auf den zu verpackenden
Gegenstand diesen umhüllend abläuft.

Weitere Merkmale zur vorteilhaften Ausgestaltung sowohl des
erfindungsgemäßen Verfahrens als auch der Vorrichtungen zu
seiner Durchführung ergeben sich aus den Unteransrprüchen
sowie der nachfolgenden Beschreibung zweier in der Zeichnung dargestellter Ausführungsbeispiele. Es zeigen:

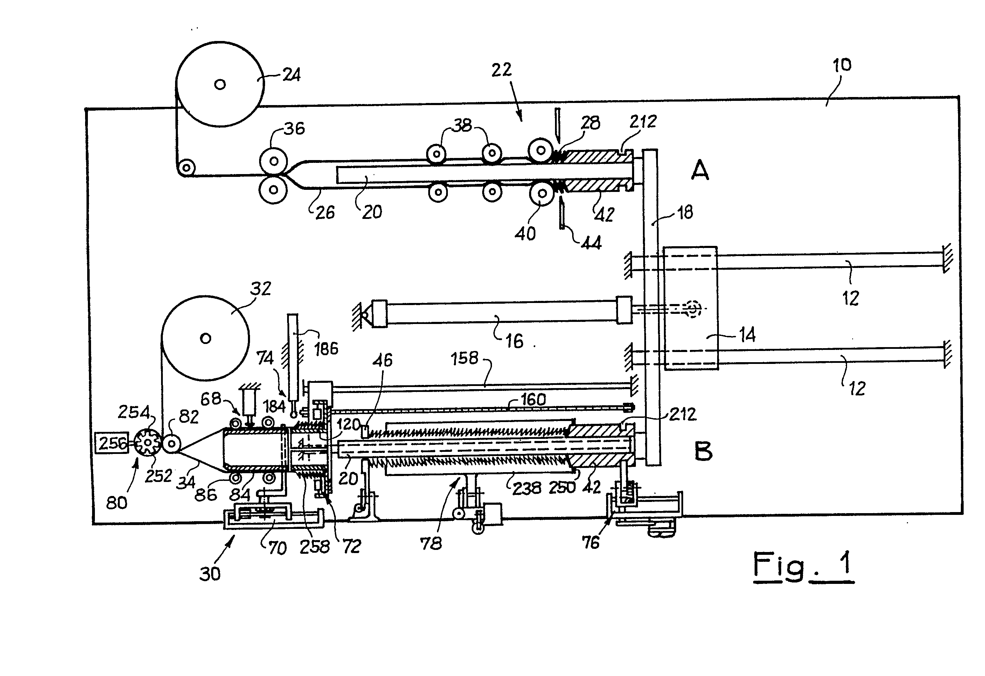

Fig. 1: in schematischer Darstellung den
grundsätzlichen Aufbau einer Raffmaschine
für schlauchförmige Wursthüllen mit
einer mechanisch arbeitenden Verpackungseinrichtung nach der Erfindung in
Draufsicht und teilweise im Schnitt,
wobei die Vorratsrollen für das Wursthüllenmaterial und das Verpackungsmaterial sowie weitere Einzelheiten zu
deren Verarbeitung aus Darstellungsgründen in die Bildebene geschwenkt
worden sind,

Fig. 2: die Stirnansicht eines bei der Verpackungsvorrichtung angeordneten Widerlagers für das Pressen der Schlauchraupen vor dem Verpacken,

Fig. 3: einen Querschnitt durch eine Führungs-
und Klemmeinrichtung für die Zuführung
des Verpackungsmaterials,

Fig. 4: in perspektivischer Darstellung die
Arbeitsseite einer Einrichtung zum
Raffen des Verpackungsmaterials,

Fig. 5:  in perspektivischer Darstellung die Rückseite der Raffeinrichtung nach Fig. 4,

Fig. 6:  die Stirnansicht einer Spreizeinrichtung für das Verpackungsmaterial,

Fig. 7:  einen Axialschnitt durch die Spreizeinrichtung nach VII-VII in Fig. 6,

Fig. 8:  die Stirnansicht einer Halte- und Abzieheinrichtung für die Anschlaghülsen auf den Raffrohren,

Fig. 9:  eine Außenansicht der Halte- und Abzieheinrichtung nach Fig. 8,

Fig. 1o:  die Stirnansicht einer Aufnahme- und Ablegeeinrichtung für die verpackten Schlauchraupen,

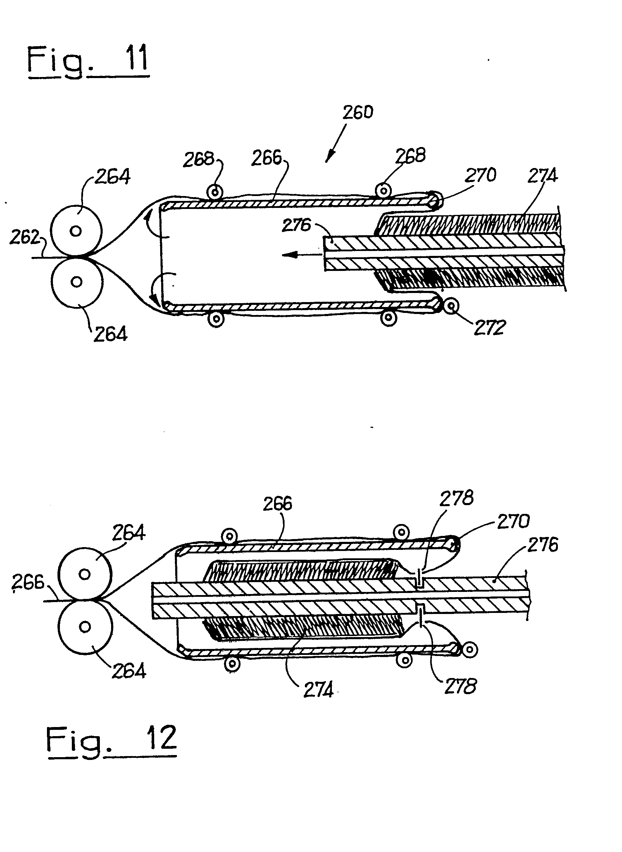

Fig. 11:  in schematischer Darstellung eine Vorrichtung zum pneumatischen Verpacken hohlzylindrischer Gegenstände während des Verpackungsvorganges und

Fig. 12  dieselbe Darstellung wie in Fig. 11 während des Abtrennvorganges.

Die in Fig. 1 in Draufsicht und teilweise im Horizontalschnitt schematisch dargestellte Raffmaschine mit Verpackungsvorrichtung trägt auf einem im wesentlichen rechteckigen Maschinenbett 1o zwei Führungsstangen 12, auf denen ein Revolverschlitten 14 mittels eines hydraulischen Kraftzylinders 16 zwischen einer in der Figur dargestellten vorgeschobenen Stellung und einer rechts davon gelegenen zurückgezogenen Stellung gesteuert verschiebbar ist. Der Revolverschlitten 12 lagert eine um eine horizontale Achse drehbare und mittels eines (nicht gezeigten) Schaltantriebs um jeweils 18o° vor- und rückschaltbare Revolverscheibe 18, an welcher diametral gegenüberliegend zwei zur Drehachse parallel langgestreckte Raffrohre 2o fliegend angebracht sind. Durch Vor- und Zurückschalten der Revolverscheibe 12 werden die Raffrohre 2o abwechselnd in eine Raffstellung A oder eine Verpackungsstellung B gebracht.

In der Raffstellung A bildet das Raffrohr 2o einen Teil einer insgesamt mit 22 bezeichneten Raffvorrichtung für das von einer Vorratsrolle 24 kommende schlauchförmige Wursthüllenmaterial. 26, das in der Raffvorrichtung 22 abschnittweise zu Raupen 28 gerafft, vom Materialstrang abgetrennt und nach Umschaltung der Revolverscheibe 12 in die Verpackungsstellung B durch eine dort in ihrer Gesamtheit mit 3o bezeichnete Verpackungsvorrichtung in einen von einer Vorratsrolle 32 oberhalb der Maschine kommendes schlauchförmiges Verpackungsmaterial 34 eingeschlossen und abgelegt wird.

Die Raffeinrichtung 22 weist in bekannter Weise ein Paar von Quetschwalzen 36, zwei Paare angetriebener Vorzugsrollen 38 sowie ein Raffwerkzeug auf, das beispielsweise aus zwei oder mehr angetriebenen Zahnrollen 4o besteht. Die Zahnrollen 4o schieben das ihnen von den Vorzugswalzen 38 zugeführte Hüllenmaterial 26 unter Bildung von Umfangsfalten gegen eine Anschlaghülse 42, die verschieblich auf dem Raffrohr 2o sitzt und mit der gesamten Revolveranordnung durch gesteuertes Ausfahren des Kraftzylinders 14 entsprechend der zunehmenden Länge der dabei gebildeten Raupe 28 aus der gezeichneten linken Stellung zurückweicht. Wenn die gewünschte Raupenlänge erreicht ist, fährt die Revolveranordnung vollends in die rechte Endstellung zurück, wobei das Raffrohr 2o das Raffwerkzeug 4o verläßt und einen Zwischenraum freigibt, in den dann die Messer einer Schneideinrichtung 44 eintreten und die Raupe 28 vom Materialstrang 26 abtrennen. Hieraufhin kann die Revolverscheibe 18 um 180° umgeschaltet werden, um das mit der Schlauchraupe 28 beladene Raffrohr 2o aus der Raffstellung A in die Verpackungsstellung B und gleichzeitig das zu diesem Zeitpunkt leere andere Raffrohr in die Raffstellung A zu verschwenken, in welcher die Revolveranordnung im Eilgang wieder in die linke Ausgangsstellung für den Beginn eines neuen Raffvorgangs vorfährt.

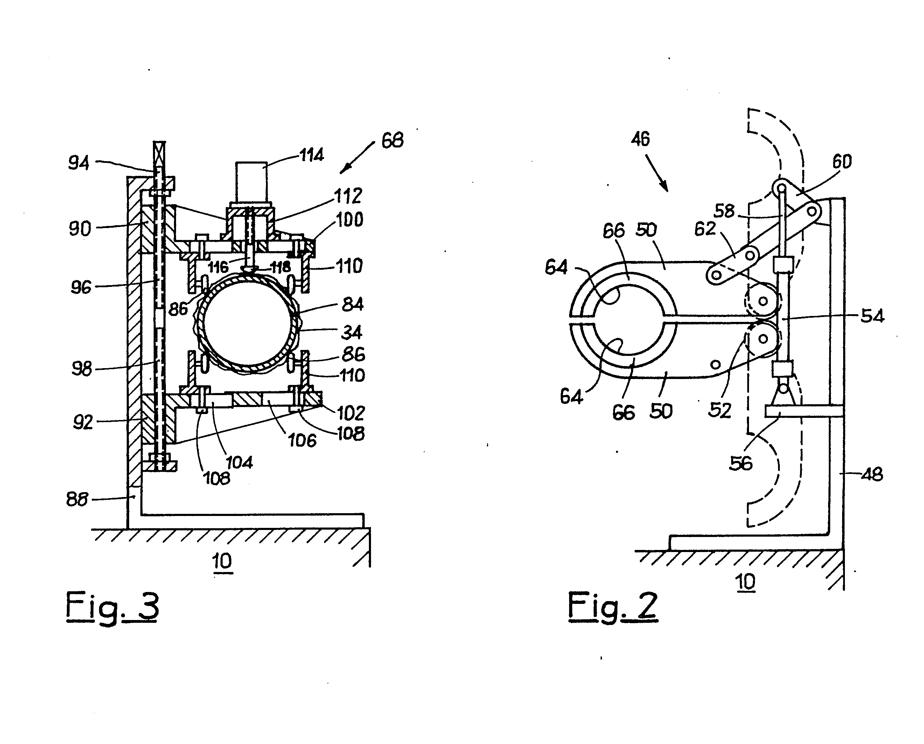

Während des Vorfahrens der Revolveranordnung wird die auf ihrem Raffrohr in die Verpackungsstellung B gebrachte Schlauchraupe 28 von der Anschlaghülse 42 gegen ein in Wirkungsstellung gebrachtes Pressenwiderlager 46 (Fig. 1 und 2) axial zusammengepreßt und anschließend, während auf dem anderen Raffrohr eine neue Raupe hergestellt wird, in einen abgeteilten Abschnitt des Verpackungsmaterials 34 eingeschlossen, in der Rückzugsstellung der Revolveranordnung seitwärts aus der Verpackungsvorrichtung herausgenommen und - gegebenenfalls nach Verschließen der Verpackungsenden - abgelegt.

Das in Fig. 2 in seinen Einzelheiten dargestellte Pressenwiderlager 46 besteht aus einem auf der Oberseite des Maschinenbetts 1o befestigten Bock 48, an dem spiegelbildlich übereinander zwei Anschlaghebel 5o angelenkt sind. Ein nur durch die Teilkreise angedeutetes Zahnradpaar 52 kuppelt die beiden Anschlaghebel 5o derart, daß sie gegensinnig zueinander zwischen einer mit ausgezogenen Linien dargestellten Anschlagstellung und einer gestrichelt dargestellten Freigabestellung verschwenkt werden können. Zum Verschwenken dient ein Kraftzylinder 54, dessen Gehäuse an einer Konsole 56 am Bock 48 angelenkt ist und dessen Kolbenstange 58 den einen Arm eines am Bock 48 gelagerten Winkelhebels 60 gelenkig erfaßt, dessen anderer Arm über eine Koppel 62 mit dem oberen Anschlaghebel 50 gekuppelt ist. Der Kraftzylinder 54 ist vorzugsweise ein doppelt wirkender Druckluftzylinder, der das Pressenwiderlager 46 beim Ausfahren öffnet und beim Einfahren schließt. In der (mit ausgezogenen Linien dargestellten) Schließstellung umfassen die Anschlaghebel 50 mit ihren sich zu Kreisquerschnitt ergänzenden Ausnehmungen 64 das Raffrohr 20 und bilden mit seitlichen Belägen 66 aus Kunststoff oder einem anderen geeigneten Material ein Widerlager für die auf dem Raffrohr befindliche Schlauchraupe 28, durch welches diese beim Verfahren der Revolveranordnung unter Mitnahme durch die Anschlaghülse 42 zusammengepreßt wird. Hierauf wird das Pressenwiderlager 46 durch Ausfahren des Kraftzylinders 54 wieder geöffnet, um Platz für das Verpacken zu machen.

Das anschließenden Verpacken der gepreßten Schlauchraupe 28 in das Verpackungsmaterial 34 erfolgt durch Raffen eines Teils dieses Materials auf einem Spreizdorn, das Aufweiten des gerafften Materials mit Hilfe des Spreizdorns, das Abtrennen des gerafften Materials vom übrigen Materialstrang, das Hinwegziehen des gerafften Materials mit Hilfe der Spreizeinrichtung über die Schlauchraupe und schließlich das seitliche Wegschwenken und Ablegen der verpackten Raupe, wobei gegebenenfalls noch (nicht gezeigte) bekannte Clipeinrichtungen zum Verschließen der Verpackungsenden mit Metallclipsen eingesetzt werden können.

Die Einrichtungen zur mechanisierten Durchführung dieses Verpackungs- und Ablegevorgangs sind gemäß Fig. 1

- eine Führungs- und Klemmeinrichtung 68,

- eine Raffeinrichtung 70,

- eine Spreizeinrichtung 72

- eine Trenneinrichtung 74,

- eine Halte- und Abzieheinrichtung 76 für die Anschlaghülse 42,

- eine Aufnahme- und Ablegeeinrichtung 78 sowie

- eine Längenmeßeinrichtung 80.

Das flach auf der Vorratsrolle 32 aufgespulte Verpackungsmaterial, das sowohl ein geschlossener Schlauch aus Kunststoffolie als auch ein in Umfangsrichtung aufweitbares Netzmaterial sein kann, verläuft über eine Umlenkrolle 82 zu der Führungs- und Klemmeinrichtung 68, in der es über ein schwimmend gelagertes Führungsrohr 84 gezogen ist, welches das flach von der Vorratsrolle 24 kommende Verpackungsmaterial auf seinen runden Querschnitt bringt. Das Führungsrohr 84 ist, wie Fig. 3 zeigt, innerhalb der Führungs-Klemmeinrichtung 68 über das darüber verlaufende Verpackungsmaterial zwischen zwei aufeinanderfolgenden Sätzen von je vier Führungsrollen 86 in Stellung gehalten. Die Führungs- und Klemmeinrichtung 68 hat einen Tragbock 88, an dem zwei Schlitten 90, 92 übereinander vertikal verschieblich angeordnet sind. Die Schlitten 90, 92 enthalten miteinander fluchtende Gewindebohrungen mit entgegengesetzten Steigungen, in die eine im Tragbock 88 axial unverschieblich gelagerte Gewindespindel 94 mit gegenläufigen Gewindeabschnitten 96, 98 eingreift. Die Schlitten 90, 92 tragen horizontale Ausleger 100 bzw. 102 mit je einem inneren und einem äußeren Langloch 104 bzw. 106, durch welche sich Befestigungsschrauben 108 für je einen Lagerbock 110 er-strecken. Jeder Lagerbock 110 lagert zwei mit Abstand hintereinanderliegende Führungsrollen 86. Durch Lösen der Befestigungs-schrauben 108 und Verdrehen der Gewindespindel 94 an ihrem oberen, mit einem Vierkant versehenen Ende können die Höhe und die Seitenlage des Führungsrohrs 84 genau justiert werden, und
es ist auch ein Austausch des Führungsrohrs gegen ein solches
mit kleinerem oder grooßerem Durchmesser zur Anpassung an
andere Kaliber der zu verpackenden Schlauchraupen 28 möglich.

Der obere Ausleger 1oo der Führungs- und Klemmeinrichtung 68
trägt eine U-förmige Stützte 112, auf der ein doppelt wirkender pneumatischer Klemmzylinder 1o4 befestigt ist. Die nach
unten gerichtete Kolbenstange 116 des Klemmzylinders 112
erstreckt sich durch eine Bohrung im oberen Ausleger 1oo und
trägt am Ende einen Klemmschuh 118, der durch Betätigen des
Klemmzylinders 114 gegen das Führungsrohr 84 mit dem darüber
verlaufenden Verpackungsmaterial 34 anstellbar ist, um Führungsrohr und Verpackungsmaterial gegen Axialbewegung festzuhalten.
Zum Lösen der Klemmung wird der Klemmzylinder 114 in umgekehrter Richtung betätigt.

Das über das Führungsrohr 84 verlaufende Verpackungsmaterial
34 wird von der Raffeinrichtung 7o erfaßt und auf die einen
Dorn 12o (Fig. 1) bildenden Aufnahmebacken der Spreizeinrichtung 72 gerafft. Dabei dient der Dorn 12o gleichzeitig als
Anschlag für das Führungsrohr 5o, um zu verhindern, daß dieses
vom Verpackungsmaterial beim Raffen mitgenommen wird.

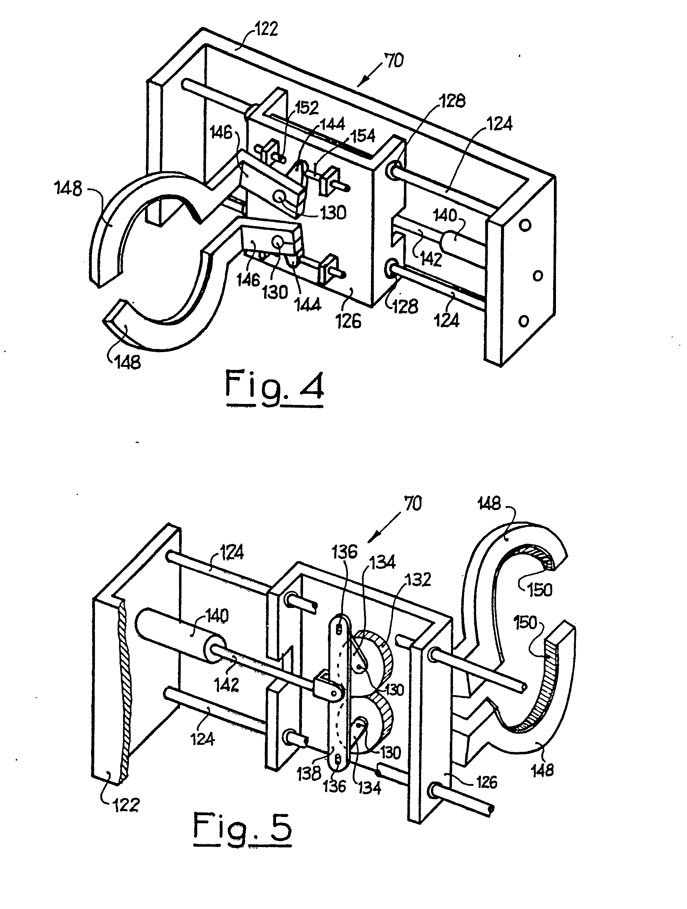

Die Raffeinrichtung 7o weist, wie die Figuren 4 und 5 zeigen,
einen U-förmigen Tragrahmen 122 auf, der mittels eines (nicht
gezeigten) Ständers auf dem Maschinenbett 1o neben der Führungs-
und Klemmeinrichtung 68 befestigt ist. Zwischen den Schenkeln
des Tragrahmens 122 erstrecken sich übereinander zwei Führungsstangen 124, auf denen ein U-förmiger Schlitten 126 mittels
Laufbuchsen 128 verschieblich gelagert ist. Die Laufbuchsen
128 bestehen vorzugsweise aus Kunststoff und üben aus später
genannten Gründen eine leichte Bremswirkung auf den Schlitten
126 aus. Der Schlitten 126 ist zu einer horizontalen Längsmittelebene symmetrisch aufgebaut und lagert an seinem Stegteil zwei übereinander angeordnete Wellen 13o, die an der Innenseite des Schlittens 126 durch ein Zahnradpaar 122 gegensinnig zueinander drehbar gekuppelt sind. Die Wellen 13o tragen ferner je einen Kurbelarm 134, deren Kurbelzapfen in das untere bzw. obere Langloch 136 einer Traverse 138 eingreifen. Ein an der einen Schenkelwand des Tragrahmens 122 mit seinem Gehäuse befestigter doppelt wirkender Kraftzylinder 14o, der vorzugsweise ein Druckluftzylinder ist, ist mit seiner Kolbenstange 122 an der Traverse 138 in deren Mitte angelenkt. Die auf der Vorderseite des Schlittens 126 vorstehenden äußeren Enden der Wellen 13o tragen in drehfester Verbindung je einen Anschlaghebel 144 und davor je einen Greiferhebel 46. An den äußeren Enden der Greiferhebel 146 sind sich quer dazu erstreckende Greiferbacken 148 lösbar und damit in ihrer Größe austauschbar befestigt, die halbringförmig ausgebildet und innenseitig mit Reibbelägen 15o versehen sind. Die beiden Greiferbacken 148 bilden somit gleichsam eine Zange, die durch gegenläufiges Verschwenken der Greiferhebel 146 geöffnet bzw. geschlossen werden kann, wobei sich die Greiferbacken 148 in der Schließstellung zu einem Kreisring ergänzen, dessen Innendurchmesser dem Außendurchmesser des Führungsrohres 84 entspricht. Die Öffnungs- bzw. Schließbewegungen der Greiferbacken 148 werden durch die Anschlaghebel 144 begrenzt, welche zwischen einstellbaren Anschlagschrauben 152, 154 am Schlitten 126 verschwenkbar sind.

Wenn der Kraftzylinder 14o in der einen oder anderen Richtung mit Druckmittel, vorzugsweise Druckluft beaufschlagt wird, wird die Kolbenstange 142 zunächst versuchen, über die Traverse 138 die Kurbelarme 134 zu verschwenken und die Wellen 13o gegensinnig zueinander zu drehen, bis die Anschlaghebel 144 von den einen oder anderen Anschlagschrauben 152 bzw. 154 abgefangen werden. Hierdurch wird die von den Greiferbacken 148 gebildete Zange, je nachdem, ob die Kolbenstange 142 aus- oder einfährt, geschlossen oder geöffnet, wobei die Laufbuchsen 128 durch den Reibschluß auf den Führungsstangen 124 die von den Wellen 13o auf den Schlitten 126 ausgeübte Reaktionskraft auf den Tragrahmen 122 übertragen und verhindern, daß sich bei dieser Umstellbewegung der Greiferbacken 148 der Schlitten 126 bewegt. Erst wenn die Anschlaghebel 142 von den entsprechenden Anschlagschrauben 152 bzw. 154 abgefangen sind, wird der Reibschluß der Laufbuchsen 128 überwunden, und der Schlitten 126 wird mit den geschlossenen bzw. geöffneten Greiferbacken 148 längs der Führungsstangen 144 über die restliche Hublänge des Kraftzylinders 14o verschoben.

Es leuchtet ein, daß bei der anschließenden Umsteuerung des Kraftzylinders 14o zuerst wieder die Greiferbacken 148 ihre Stellung ändern und dann erst der Schlitten 126 in umgekehrter Richtung verfahren wird. Die innenseitigen Ausrundungen der Greiferbacken 148 mit den darin angeordneten Reibbelägen 15o sind, wie bereits erwähnt, dem Außendurchmesser des Führungsrohres 84 angepaßt, so daß die Greiferbacken 148 im geschlossenen Zustand das über das Führungsrohr 84 verlaufende Verpackungsmaterial 34 reibschlüssig erfassen und auf dem Dorn 118 der Spreizeinrichtung 72 vorschieben, während sie im geöffneten Zustand frei über das Verpackungsmaterial in die Ausgangsstellung zurückgleiten. Da die Greiferbacken 148 lösbar an den Hebeln 146 befestigt sind, können sie bei Änderung des Verpackungsquerschnitts leicht ausgetauscht werden.

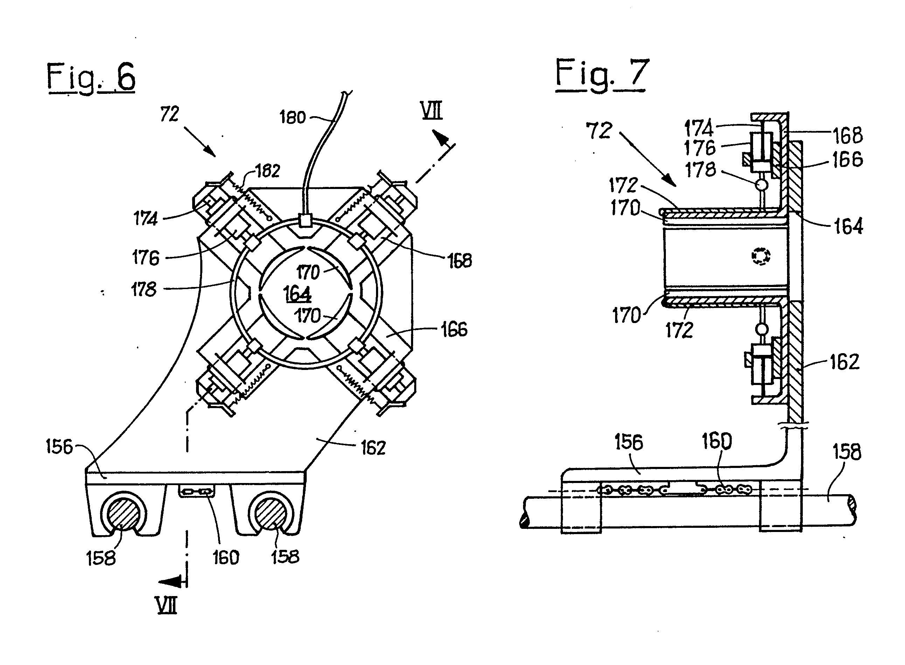

Die in den Figuren 6 und 7 gezeigte Spreizeinrichtung 72 weist einen Schlitten 156 auf, der auf einer auf dem Maschinenbett 1o angebrachten Stangenführung 158 mittels einem im unteren Bereich des Maschinenbetts angeordneten (nicht gezeigten) umsteuerbaren Elektromotors über einen Kettentrieb 116 hin- und herverfahrbar ist. Der Schlitten 156 trägt eine aufrechtstehende Platte 162 mit einer kreisförmigen zentralen Öffnung, deren Zentrum auf der Achse des in Verpackungsstellung befindlichen Raffrohrs 2o liegt. Ein an der Platte 162 befestigter sternförmiger Führungsrahmen 166 bildet radiale Laufbahnen für vier um die Öffnung 164 verteilte Schieber 168, die an den inneren Enden je eine sich axial erstreckende rohrsegmentförmige Aufnahmebacke 170 tragen. Die Aufnahmebacken 170 ergänzen sich in den radial inneren Endstellungen der Schieber 168 zu dem erwähnten Dorn 118, der in dieser Stellung denselben Außendurchmesser wie das Führungsrohr 84 aufweist. Die Aufnahmebacken 170 sind auf den Außenseiten mit einer Gleitschicht 172, vorzugsweise einer Folie aus Polytetrafluoräthylen versehen und können durch Lösen des Führungsrahmens 166 gegen solche mit kleineren oder größeren Aufnahmebacken zur Anpassung an andere Verpackungsdurchmesser ausgetauscht werden. Die abgewinkelten äußeren Enden 174 der Schieber 168 werden von den Kolbenstangen einfach-wirkender hydraulischer Kraftzylinder 176 erfaßt, die an dem Führungsrahmen 166 befestigt und an eine Ringleitung 178 angeschlossen sind. Der Ringleitung 178 kann über eine flexible Leitung 180 Druckflüssigkeit zugeführt werden, durch welche die Schieber 168 mit den daran befestigten Aufnahmebacken 170 radial nach auswärts in eine Spreizstellung gegen die Wirkung von Rückstellfedern 182 verschiebbar sind. In der Spreizstellung umschreiben die Aufnahmebacken 170 einen größeren Durchmesser als die zu verpackenden Gegenstände und können durch Verschieben des Schlittens 156 mit Hilfe des elektromotorisch betätigten Kettentriebs 160 über die in der Verpackungsstellung B befindliche Schlauchraupe 28 hinwegbewegt werden.

Die Trenneinrichtung 74 kann in bekannter Weise von einem Glühdraht 184 (Fig. 1) gebildet sein, der im elektrisch aufgeheizten Zustands mittels eines Kraftzylinders 186 quer durch das Verpackungsmaterial hindurchgeführt wird, nachdem die Spreizeinrichtung 72 auf der Schlittenführung 158 geringfügig von dem durch den Klemmzylinder 114 festgeklemmten Führungsrohr 84 wegbewegt worden ist.

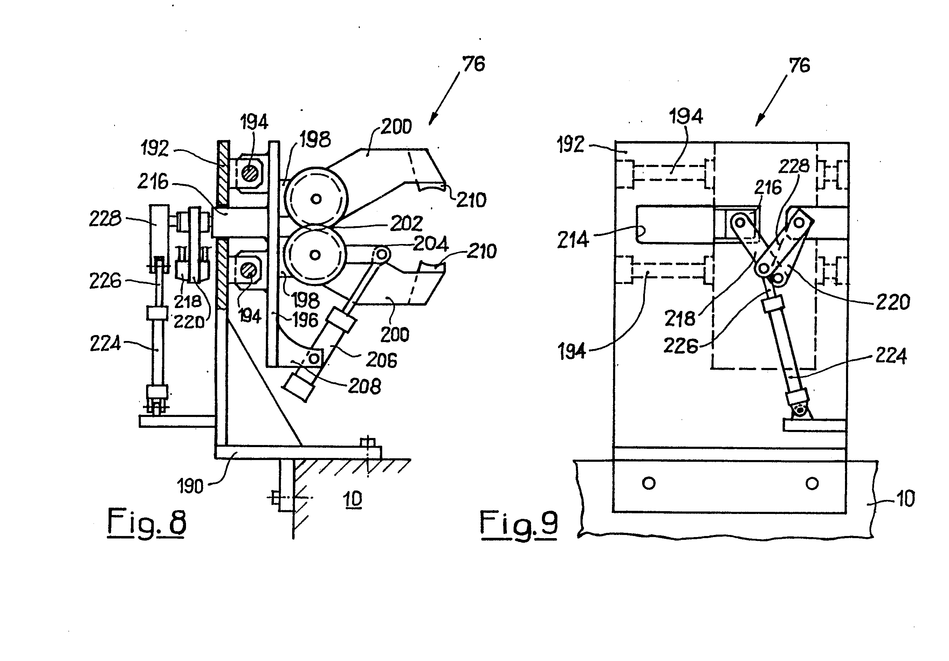

Die in den Figuren 8 und 8 genauer dargestellte Halte- und Abzieheinrichtung 76 weist einen verhältnismäßig breiten Ständer 19o auf, der am Maschinenbett 1o nahe dem hinteren Ende der Stangenführung 124 befestigt ist. Der Ständer 19o hat eine aufrechtstehende Tragplatte 192, die übereinander zwei horizontale Führungsstangen 194 trägt, auf denen ein Schlitten 196 längs dem Raffrohr 2o verschieblich ist. An dem Schlitten 196 sind in Lagerböcken 198 spielgelbildlich zueinander zwei Klauenhebel 2oo gelagert und durch ein Zahnradpaar 2o2 gegensinnig schwenkbar gekuppelt. Ein mit dem unteren Klauenhebel 2oo drehfest verbundener Hebel 2o4 ist an die Kolbenstange eines Kraftzylinders 2o6 angelenkt, dessen Gehäuse schwenkbar in einem Gabelstück 2o8 am Schlitten 196 gehalten ist. Die Enden der Klauenhebel 2oo tragen vorzugsweise aus Kunststoff bestehende flache Klauen 21o, deren gegeneinanderweisende Stirnflächen ausgerundet sind. Die auf den Raffrohren 2o verschieblichen Anschlaghülsen 82, die eine größere Länge als die Aufnahmebacken 17o besitzen, enthalten nahe ihrer hinteren Enden Ringnuten 112, in welche die Klauen 21o spielfrei eingeschwenkt werden können. Auf diese Weise ist es möglich, die jeweils in Verpackungsstellung befindliche Anschlaghülse 82 am Schlitten 196 der Halte- und Abzieheinrichtung 76 festzulegen.

Die Tragplatte 192 der Halte- und Abzieheinrichtung 76 ist zwischen den Führungsstangen 194 mit einer langgestreckten Durchbrechung 214 versehen, durch welche sich ein Ansatz 216 am Schlitten 196 erstreckt. An dem Ansatz 216 ist auf der Außenseite der Tragplatte 192 (Fig. 9) der eine Schenkel 218 eines Kniehebels gelagert, dessen anderer Schenkel 22o an der Tragplatte 192 gelagert ist. Ein an der Tragplatte 192 auf einer Konsole 222 schwenkbar angebrachter Kraftzylinder 224 erfaßt mit seiner Kolbenstange 226 einen Hebel 228, der gemeinsam mit dem Kniehebelschenkel 22o verschwenkbar ist. Durch Ein- und Ausfahren der Kolbenstange 226 wird somit der Kniehebel 228, 22o gestreckt bzw. eingeknickt und der Schlitten 196 mit den Klauenhebeln 21o auf den Führungsstangen 194 längs
dem Raffrohr 2o verschoben.

Die Halte- und Abzieheinrichtung 76 ist an solcher Stelle
auf dem Maschinenbett 1o angeordnet, daß die Klauen 21o der
Klauenhebel 2oo bei gestrecktem Kniehebel 218, 22o in die
Ringnut 212 der Anschlaghülse 42 eingreifen, wenn die
Revolveranordnung in die Ausgangsstellung zu Beginn des
Raffvorgangs, d.h. die in Fig. 1 linke Endstellung vorgefahren ist. Die Klauen 21o sind lösbar an den Klauenhebeln
2oo befestigt und können dadurch leicht ausgewechselt werden, wenn die Raffrohre 2o mit den darauf verschieblichen
Anschlaghülsen 42 zur Anpassung an andere zu raffende
Wursthüllenkaliber ausgewechselt werden.

Die Aufnahme- und Ablegeeinrichtung 78 weist gemäß Fig. 1o
einen am Maschinenbett 1o befestigten hoch aufragenden
Ständer 23o auf, an dessen oberen Ende eine sich seitlich
nach abwärts erstreckende Schwinge 232 angelenkt ist. Die
Schwinge 232 trägt am unteren Ende eine Lagerkonsole 234,
an der zwei Hebelarme 244 gelagert sind, welche je eine langgestreckte Halbschale 238 tragen. Die Hebelarme 244 sind durch
ein nur durch die Teilkreise angedeutetes Zahnradpaar 24o
miteinander gekuppelt und können mittels eines vorzugsweise
pneumatischen Kraftzylinders 242 über einen am oberen Hebel
236 befestigten Hebelarm 248 zwischen der in Fig. 1o mit ausgezogenen Linien eingezeichneten Schließstellung und einer
gestrichelt eingezeichneten Öffnungsstellung verschwenkt werden. Die Schwinge 232 ist ferner mittels eines weiteren pneumatischen Kraftzylinders 246 über einen am oberen Schwingenende angebrachten Hebelarm 248 zwischen einer mit ausgezogenen Linien dargestellten Aufnahmestellung, in der die
geschlossenen Halbschalen 238 eine auf dem Raffrohr 2o befindliche Schlauchraupe, die später näher erläutert, erfassen,
und einer gestrichelt eingezeichnete Ablegestellung verschwenkbar.

- 16 -

In letzterer Stellung kann vor dem Öffnen der Halbschalen 238 noch ein Verclippen der Verpackungsenden
mittels (nicht gezeigter) bekannter Clip-Vorrichtungen
erfolgen.

Die Halbschalen 238 sind an den der Anschlaghülse 42 zugewandten Enden mit radial nach einwärts gerichteten Umfangskragen 250 versehen, die beim Schließen der Halbschalen
zunächst auf die Anschlaghülse 42 auftreffen und dann beim
Zurückziehen der Anschlaghülse zwischen das Ende der Schlauchraupe 28 und die Stirnseite der Anschlaghülse 42 in später
beschriebener Weise eindringen.

Die Längenmeßeinrichtung schließlich besteht gemäß Fig. 1
aus einer durch eine (nicht gezeigte) Feder gegen die noch
flache  Verpackungshülle 34 im Bereich der Umlenkrolle 82
angedrückte Tastrolle 252, welche von dem Verpackungsmaterial
34 reibschlüssig mitgenommen wird und eine Zahnscheibe 254
aus magnetischem Material dreht, die von einem Meßwertgeber
256 abgetastet wird. Die durch die Abstastung der Zahnscheibe
254 von dem Meßwertgeber 256 erzeugten elektrischen Impulse
werden in einer (nicht gezeigten) elektronischen Zähleinrichtung gezählt und mit einem Sollwert verglichen, welcher
der Verpackungslänge für eine Schlauchraupe 28 entspricht.
Die Zähleinrichtung beginnt zu zählen, sobald die Raffeinrichtung 70 eingeschaltet wird. Sobald die Anzahl der gezählten Impulse mit dem Sollwert übereinstimmt, wird die Raffeinrichtung 70 abgeschaltet und kehrt aus jeder beliebigen
Zwischenstellung unter Öffnen der Greiferbacken 148 in die
Ausgangsstellung über dem Führungsrohr 84 zurück.

Die vorstehend beschriebene Verpackungseinrichtung arbeitet
wie folgt:

Es sei angenommen, daß die Spreizeinrichtung 72 auf der
Stangenführung 158 ihre vordere Endlage eingenommen habe,
in welcher die den Dorn 120 bildenden Aufnahmebacken 170
in ungespreiztem Zustand stirnseitig gegen das und Klemmeinrichtung 68 anliegen. Die Raffreinrichtung 7o befindet sich in der Ausgangsstellung, in welcher die Greiferbacken 148, wie in Fig. 1 angedeutet, über dem Ende des Führungsrohres 84 stehen. Diese Stellung kann bereits eingenommen sein,
bevor die Revolverscheibe 18 umgeschaltet wird, um ein in der
Raffstellung A mit einer neuen Schlauchraupe 28 beladenes
Führungsrohr 2o in die Verpackungsstellung B zu verschwenken.

In der vorerwähnten Stellung kann die Raffeinrichtung 7o ohne
Rücksicht auf die Umschaltung der Revolverscheibe 18 und das Vorfahren der Revolveranordnung in die in Fig. 1 gezeigte Stellung
eingeschaltet werden, wozu der Klemmschuh 118 durch entsprechende Betätigung des Klemmzylinders 114 zuvor gelöst sein muß.
Die Raffeinrichtung 7o erfaßt durch wechselweises Betätigen
des Kraftzylinders 14o in Vorwärts- und Rückwärtsrichtung das
über dem Führungsrohr 84 verlaufende Verpackungsmaterial 34 und
schiebt mit  jeder Vorwärtsbewegung eine dem Hub des Kraftzylinders
14o entsprechende Länge auf den Dorn $1_{2o}$, auf dem somit eine
Raupe 258 ähnlich der Raupe 28 gebildet wird, wie sie von der
Raffvorrichtung 22 auf dem Führungsrohr 2o in der Raffstellung
A erzeugt wird.

Der zur Bildung der Raupe 258 erforderliche Materialabzug von
der Vorratsrolle 32 wird auf die Tastrolle 252 übertragen und
mit Hilfe der Zahnscheibe 254 und des Meßwertgebers 256 in
Impulse umgewandelt, die der erwähnten elektronischen Zähleinrichtung zugeführt werden. Sobald die Anzahl der gezählten
Impulse mit dem dort gespeicherten Sollwert übereinstimmt, wird
der Kraftzylinder 14o der Raffeinrichtung 7o aus jeder beliebigen Zwischenstellung abgeschaltet und in die Ausgangslage der
Greiferhebel 146 über dem Führungsrohr 84 zurückgeführt.

In der Zwischenzeit hat die Revolvereinrichtung genügend Zeit
zur Umschaltung der Revolverscheibe 18 und zum Vorfahren der
Raffrohre in die in Fig. 1 gezeigte Stellung, wobei das Pressenwiderlager 46 geschlossen ist und die in Verpackungsstellung B befindliche Wursthüllenraupe 28 zusammengepreßt wird. Sobald
die Revolveranordnung ihre vordere Endstellung erreicht hat,
schließt die Halte- und Abzieheinrichtung 76, deren Schlitten
196 bei gestrecktem Kniehebel 218, 22o in der linken Endstellung
steht, und die Klauen 21o greifen in die Ringnut 212 der Anschlaghülse 42 ein. Desweiteren öffnet das Pressenwiderlager 46, der
Klemmzylinder 114 wird in Klemmrichtung betätigt, so daß der
Klemmschuh 118 das Führungsrohr 84 mit dem darüber verlaufenden Verpackungsmaterial 34 festklemmt, und die Aufnahmebacken
17o mit der darauf befindlichen Raupe 258 werden durch Betätigen der hydraulischen Kraftzylinder 176 gespreizt. Daraufhinhin wird der Elektromotor für den Kettentrieb 16o kurzzeitig
eingeschaltet, so daß der Schlitten 156 mit der Spreizeinrichtung 72 um wenige Zentimeter von dem Führungsrohr 84 wegfährt.
Nun kann der Glühdraht 184 der Trenneinrichtung 74 durch Anschaltung an eine entsprechende Stromquelle beheizt und durch
Betätigen des Kraftzylinders 186 durch den Spalt zwischen dem
Führungsrohr 84 und den Aufnahmebacken 17o hindurchgeführt
werden, wobei er die Raupe 258 auf der Spreizeinrichtung 72
von dem übrigen Verpackungsmaterial 34 trennt. Der Glühdraht
184 wird unmittelbar an dem Führungsrohr 84 vorbeigeführt,
während die Stirnenden der Aufnahmebacken 17o einen verhältnismäßig großen Abstand zur Bahn des Glühdrahtes 184 aufweisen,
so daß ein Materialabschnitt von mehreren Zentimetern Länge
über die Enden der Aufnahmebacken 17o vorsteht und sich aufgrund der Elastizität des Verpackungsmaterials wieder auf
seinen Ruhedurchmesser verengt.

Inzwischen kann die Raffvorrichtung 22 für das Wursthüllenmaterial eingeschaltet worden sein, und die Revolveranordnung
mit den Führungsrohren 2o durch Ausfahren des hydraulischen
Kraftzylinders 16 langsam nach rechts in Fig. 1 verfahren.
Da die Klauen 21o der Halte- und Abzieheinrichtung die Anschlaghülse 42 auf dem in Verpackungsstellung B befindlichen Raffrohr 2o erfassen, nehmen diese Anschlaghülse und die zu verpackende Schlauchraupe 28 an dieser Axialbewegung nicht teil.

Nun wird der Elektromotor für den Kettentrieb 160 erneut,
und zwar im Eilgang eingeschaltet und führt die gespreizten
Aufnahmebacken 170 über die zu verpackende Raupe 28 hinweg,
wobei das geschrumpfte überstehende Ende der Verpackungsmaterialraupe 258 an dem Stirnende der zu verpackenden Raupe
28 abgefangen wird und darauf fortlaufend weiteres Verpackungsmaterial von der Raupe 258 auf den gespreizten Aufnahmebacken 170
abzieht und damit die zu verpackende Raupe 28 einhüllt.

Sobald die Spreizeinrichtung 72 mit den Aufnahmebacken 170
über der Anschlaghülse angekommen ist, wird die Schwinge 232
der Aufnahme- und Ablegeeinrichtung 78 durch Betätigen des
Kraftzylinders 242 gegeneinander bewegt. Dabei treffen die
kragenförmigen Ansätze 250 zunächst auf die Anschlaghülse 42,
wodurch ein vollständiges Schließen der Halbschalen vorerst
verhindert wird. Nun wird der Kraftzylinder 224 der Halte- und
Abzieheinrichtung 76 betätigt, und der Kniehebel 218, 220 wird
eingeknickt, wodurch die Anschlaghülse 42 aus dem Bereich der
Aufnahmebacken 170 der Spreizeinrichtung 72 nach rechts in
Fig. 1 herausgezogen wird. Sobald hierbei die Anschlaghülse 42
die kragenförmigen Ansätze freigibt, schließen die Halbschalen
238 unter der Wirkung des im Kraftzylinder 246 anstehenden
Betätigungsdrucks vollständig, und die kragenförmigen Ansätze
250 verhindern eine axiale Ausdehnung der Raupe 28 über den
Bereich der Halbschalen 238 hinaus.

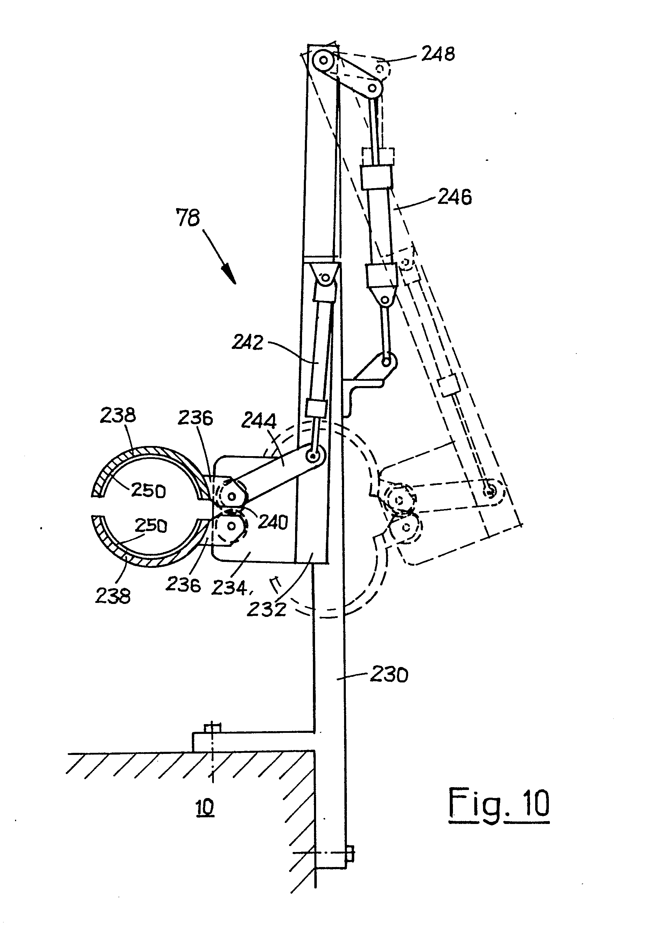

Wenn die Anschlaghülse 42 aus dem Bereich der Aufnahmebacken
170 der Spreizeinrichtung 72 vollständig herausgezogen worden
ist, können die Aufnahmebacken 170 durch Entlüftung der
hydraulischen Kraftzylinder 176 unter der Wirkung der Rückstellfedern 182 wieder in ihre ungespreizte Stellung zurückkehren, wodurch auch der noch auf den Aufnahmebacken 170
befindliche Rest der Raupe 258 sich zusammenzieht. Hieraufhin
wird durch umgekehrtes Betätigen des Kraftzylinders 246 der Aufnahme- und Ablegeeinrichtung 78 die Schwinge 232 nach auswärts
verschwenkt, und die Halbschalen 238 bringen die verpackte Raupe
28 aus dem Verpackungsbereich in die in Fig. 10 gestrichelt
eingezeichnete Ablegestellung, in welcher die Halbschalen - ggf.
nach vorhergehendem Verschließen der Verpackungsenden - öffnen
und die verpackte Raupe ablegen.

Die Klauenehebel 2oo der Halte- und Abzieheinrichtung 76 werden jetzt geöffnet, der Kniehebel 218, 22o wird gestreckt, und die Spreizeinrichtung 72 wird über den Kettentrieb 16o in die Anfangsstellung zurückverschoben, um unter Wiederholung des vorstehend beschriebenen Vorganges erneut Verpackungsmaterial 34 für die nächste zu verpackende Schlauchraupe 28 aufzunehmen. Gleichzeitig kann die Revolverscheibe 18 in der zurückgezogenen Endstellung der Revolveranordnung, die vor dem Herausschwenken der verpackten Schlauchraupe 28 mit Hilfe der Aufnahme- und Ablegeeinrichtung 78 erreicht sein muß, erneut umgeschaltet werden.

Die vorstehend beschriebene Vorrichtung ist selbstverständlich nicht auf ihre Anwendung bei einer Raffmaschine beschränkt, sondern kann auch getrennt davon aufgestellt sein, und zur Aufnahme der zu verpackenden Schlauchraupen 28 können anstelle der Raffrohre 2o auch massive Stangen verwendet werden, die mit einer geeigneten Schlittenanordnung in die Raffvorrichtung hineingefahren werden.

Bei der in Fig. 11 gezeigten pneumatischen Raffvorrichtung, die in ihrer Gesamtheit mit 26o bezeichnet ist, wird das von einer (nicht gezeigten) Vorratsrolle kommende schlauchförmige Verpackungsmaterial 262 zunächst zwischen einem Quetschwalzenpaar 264 hindurch und dann über ein schwimmendes Führungsrohr 266 hinweggeführt, das in ähnlicher Weise wie das Führungsrohr 84 der vorbeschriebenen mechanischen Verpackungsvorrichtung zwischen Führungsrollen 268 zentriert sein kann. Das Führungsrohr 266 ist an dem den Quetschwalzen 264 abgekehrten Ende mit einer radial vorspringenden Ringwulst 27o versehen, gegen welche zwei oder mehr ortsfest gelagerte Anschlagrollen 272 anliegen.

Der zu verpackende Gegenstand 274, der bei dieser Vorrichtung hohlzylindrisch sein muß und wiederum eine Schlauchraupe aus Wursthüllenmaterial sein kann, wird auf einem hohlzylindrischen Dorn 276 in das Führungsrohr 268, dessen Innendurchmesser geringfügig größer als der zu verpackende Gegenstand ist, eingefahren und erfaßt mit dem vorderen Ende des Gegenstandes 274 das vordere Ende des über den Ringwulst 270 verlaufenden und sich wieder verengenden Verpackungsmaterials, welches sich dichtend an den Gegenstand anlegt.

Durch den Dorn 276 wird Druckluft eingeblasen mit der Folge, daß, sobald der zu verpackende Gegenstand 274 das Verpackungsmaterial 262 dichtend erfaßt hat, dieses aufgeblasen wird und sich über den Außendurchmesser des Führungsrohrs 266 hinaus erweitert. Dadurch kann mit dem weiteren Eindringen des zu verpackenden Gegenstandes 274 in das Führungsrohr 266 praktisch ohne Reibung weiteres Verpackungsmaterial 262 durch die Quetschwalze 264 hindurch über das Führungsrohr 266 hinweg abgezogen werden, welches sich nach Umlenkung am Ringwulst 270 auf den zu verpackenden Gegenstand 274 auflegt und diese zunehmend einhüllt.

Das Führungsrohr 266 ist etwas länger als der zu verpackende Gegenstand 274, der bis hinter die Ringwulst 270 in das Führungsrohr 266 eingefahren wird (Fig.12). Hierauf wird die Druckluftzufuhr durch den Dorn 276 abgeschaltet, und ein in einer Ringnut 278 des Dorns 276 angeordnetes rotierendes Messer wird auf geeignete Weise in Drehung gesetzt und trennt das Verpackungsmaterial hinter dem zu verpackenden Gegenstand 274 von dem über das Führungsrohr 266 und die Ringwulst 270 verlaufenden Materialstrang ab, wobei das Strangende über die Ringwulst 270 hinaus übersteht und sich auf seinen Ruhedurchmesser zusammenzuziehen vermag. Der verpackte Gegenstand 274 wird darauf aus dem Führungsrohr 266 durch das überstehende Strangende hindurch herausgezogen, wozu am Ende des Dorns 276 eine (nicht gezeigte) Mitnehmereinrichtung angeordnet sein kann, die verhindert, daß der verpackte Gegenstand an dem überstehenden Strangende hängenbleibt.

Patentansprüche

―――――――――

1. Verfahren zum Verpacken langgestreckter zylindrischer
Gegenstände, insbesondere Wursthüllenraupen, in schlauchförmiges, elastisch aufweitbares Verpackungsmaterial,
das im ungeweiteten Zustand einen kleineren Durchmesser
als die zu verpackenden Gegenstände aufweist und als
Strang von beliebiger Länge zur Verfügung steht, d a -
d u r c h  g e k e n n z e i c h n e t , daß in fortgesetzter zyklischer Wiederholung ein mindestens der Verpackungslänge eines Gegenstandes entsprechender Abschnitt
des Verpackungsmaterials auf einen größeren Durchmesser
als die zu verpackenden Gegenstände aufgeweitet wird und
darauf ein solcher Gegenstand unter Erfassen eines unaufgeweiteten Endabschnitts des Verpackungsmaterials und
anschließendes Abziehen des aufgeweiteten Materialsabschnitts aus dem Aufweitbereich relativ durch das Verpackungsmaterial bis zur vollständigen Einhüllung des
Gegenstandes hindurchbewegt wird, wobei außerdem im Verlaufe eines jeden solchen Verfahrenszyklus das Verpackungsmaterial in der für die Verpackung eines Gegenstandes erforderlichen Länge vom Materialstrang abgetrennt wird.

2. Verfahren nach Anspruch 1, d a d u r c h  g e k e n n -
z e i c h n e t , daß das Verpackungsmaterial mechanisch
aufgeweitet wird.

3. Verfahren nach Anspruch 2, d a d u r c h  g e k e n n -
z e i c h n e t , daß das Abtrennen von dem Materialstrang nach dem Aufweiten, aber vor dem Einhüllen des
Gegenstandes mit dem aufgeweiteten Verpackungsmaterial
erfolgt.

4. Verfahren nach Anspruch 2 oder 3, d a d u r c h  g e -
k e n n z e i c h n e t , daß das Verpackungsmaterial
in der für die Verpackung erforderlichen Länge vor dem

- 24 -

Aufweiten axial zusammengerafft wird.

5. Verfahren nach Anspruch 3 und 4, d a d u r c h  g e -
k e n n z e i c h n e t , daß das Abtrennen zur Bildung
des vom Gegenstand zu erfassenden unaufgeweiteten Endabschnitts mit Abstand zum Bereich der Aufweitung vorgenommen wird.

6. Verfahren nach Anspruch 1, d a d u r c h  g e k e n n -
z e i c h n e t , daß das Verpackungsmaterial pneumatisch
aufgeweitet wird.

7. Verfahren nach Anspruch 6, d a d u r c h  g e k e n n -
z e i c h n e t , daß das Abtrennen nach dem Einhüllen
des Gegenstandes mit dem Verpackungsmaterial erfolgt.

8. Verfahren nach einem der vorhergehenden Ansprüche zum
Verpacken von Schlauchraupen, insbesondere Wursthüllenraupen, d a d u r c h  g e k e n n z e i c h n e t ,
daß die Schlauchraupen vor dem Einhüllen in das Verpackungsmaterial axial zusammengepreßt werden.

9. Vorrichtung zur Durchführung des Verfahrens nach einem
der Ansprüche 2 bis 5 und/oder 8 , g e k e n n z e i c h -
n e t  d u r c h  eine Trageinrichtung (2o) für jeweils einen zu verpackenden Gegenstand (28), eine Anzahl ringsum die Trageinrichtung (2o) angeordneter und
relativ zu dieser in Längsrichtung des Gegenstandes (28)
bewegbarer Aufnahmeglieder (17o) für einen zum Verpacken erforderlichen Materialabschnitt, einen die Aufnahmeglieder (17o) an den einen Enden tragenden Spreizmechanismus (168, 176) zum radialen Auseinanderspreizen
der Aufnahmeglieder sowie Einrichtungen (7o, 74) zum
Aufziehen des Verpackungsmaterials (34) auf die ungespreizten Aufnahmeglieder (17o) und zum Abtrennen des

- 25 -

aufgezogenen Materialabschnitts vom Materialstrang nach dem Spreizen.

10. Vorrichtung nach Anspruch 9, d a d u r c h   g e k e n n - z e i c h n e t , daß die Aufnahmeglieder von rohrsegmentförmigen Backen (17o) gebildet sind, die sich im ungespreizten Zustand zu einem zylindrischen Rohr ergänzen.

11. Vorrichtung nach Anspruch 9 oder 1o, d a d u r c h   g e - k e n n z e i c h n e t , daß die Aufnahmeglieder (17o) mit einem Gleitmaterial (172) beschichtet sind.

12. Vorrichtung nach Anspruch 11, d a d u r c h   g e k e n n - z e i c h n e t , daß das Gleitmaterial eine Folie (172) aus Tetrafluoräthylen ist.

13. Vorrichtung nach einem der Ansprüche 9 bis 12, g e - k e n n z e i c h n e t   d u r c h   ein vor den Auf- nahmegliedern (17o) innerhalb des Verpackungsmaterials (34) schwimmend angeordnetes und über dieses von außen zentriertes Führungsrohr (84) zum Zuführen des Ver- packungsmaterials zu den Aufnahmegliedern (17o).

14. Vorrichtung nach Anspruch 13, d a d u r c h   g e - k e n n z e i c h n e t , daß das Führungsrohr (84) gegen Axialverschiebung von außen über das Verpackungsmaterial (34) festklemmbar ist und der Spreizmechanismus (72; 168, 176) mit den Aufnahmegliedern (17o) zu Schaffung eines Trennspaltes nach dem Aufziehen des Verpackungsmaterials gesteuert axial vom geklemmten Führungsrohr (84) wegbewegbar ist.

15. Vorrichtung nach Anspruch 14, d a d u r c h   g e - k e n n z e i c h n e t , daß der Spreizmechanismus (168, 176) auf einem in Längsrichtung des zu verpackenden Gegenstandes (28) verschieblichen Schlitten (156)
angeordnet ist.

16. Vorrichtung nach Anspruch 14 oder 15 zum Verpacken der
Gegenstände mit Schlauchmaterial aus elastischer Kunst-
stoffolie, d a d u r c h   g e k e n n z e i c h n e t ,
daß die Trenneinrichtung (74) von einem durch den
Trennspalt hindurchführbaren, elektrisch aufheizbaren
Glühdraht (184) gebildet ist.

17. Vorrichtung nach einem der Ansprüche 13 bis 16, d a -
d u r c h   g e k e n n z e i c h n e t , daß die
Aufzieheinrichtung (Raffeinrichtung 7o) zwei gleichzeitig mit je einer Umfangshälfte des Verpackungsmaterials (34) in und außer Eingriff bringbarer halbkreisförmige Greiferbacken (148) aufweist, die nach
dem Ineingriffbringen in Aufziehrichtung längs den
Aufnahmegliedern (17o) bewegbar und nach dem Außereingriffbringen in ihre Ausgangsstellung auf dem
Führungsrohr (84) zurückbewegbar sind.

18. Vorrichtung nach Anspruch 17, d a d u r c h   g e -
k e n n z e i c h n e t , daß die Greiferbacken (148)
im Eingriffsbereich mit Reibbelägen (15o) versehen sind.

19. Vorrichtung nach Anspruch 17 oder 18, d a d u r c h
g e k e n n z e i c h n e t , daß die Länge der Aufnahmeglieder (17o) einen Bruchteil der Länge der zu
verpackenden Gegenstände (28) beträgt und die Greiferbacken (148) zum Aufziehen des Schlauchmaterials (34)
auf die Aufnahmeglieder (17o) unter axialer Raffung
mehrfach hin- und herbewegbar sind.

20. Vorrichtung nach einem der Ansprüche 9 bis 19 zum
Verpacken von zu Raupen gerafften Schlauchhüllen, insbesondere Wursthüllen, d a d u r c h  g e k e n n -
z e i c h n e t , daß die Trageinrichtung von einem
beim Raffen der zu verpackenden Schlauchhüllen (26)
verwendeten Raffrohr (2o) gebildet ist.

21. Vorrichtung nach Anspruch 2o, d a d u r c h  g e -
k e n n z e i c h n e t , daß der Spreizmechanismus
(168, 176) mit dem auf die Aufnahmeglieder (17o) aufgezogenen und aufgeweiteten Verpackungsmaterialabschnitt längsweise über die von dem Raffrohr (2o) getragene Schlauchraupe (28) hinwegbewegbar ist.

22. Vorrichtung nach Anspruch 21, d a d u r c h  g e -
k e n n z e i c h n e t , daß das Raffrohr (2o) zur
Abstützung der Schlauchraupe (28) bei der Hinwegbewegung der gespreizten Aufnahmeglieder (17o) ein Anschlagglied (42) von etwa gleichem Durchmesser wie
die Schlauchraupe (28) trägt, über das die gespreizten
Aufnahmeglieder (17o) gleichfalls hinwegbewegbar sind
und daß am Ende dieser Hinwegbewegung aus dem Bereich
der Aufnahmeglieder (17o) herausziehbar ist.

23. Vorrichtung nach Anspruch 22, d a d u r c h  g e -
k e n n z e i c h n e t , daß das Anschlagglied von
einer auf dem Raffrohr (2o) verschieblichen Anschlaghülse (42) gebildet ist, die von einer nach Beendigung
der Bewegung der gespreizten Anschlagglieder (17o)
axial verschieblichen Abzieheinrichtung mitnehmbar ist.

24. Vorrichtung nach Anspruch 22 oder 23, g e k e n n -
z e i c h n e t  d u r c h  eine die verpackte
Schlauchhüllenraupe (28) erfassende Aufnahme- und Ablegeeinrichtung (78).

- 2 -

25. Vorrichtung nach Anspruch 24, d a d u r c h  g e -
k e n n z e i c h n e t , daß die Aufnahme- und Ablegeeinrichtung (74) zwei langgestreckte Halbschalen (238)
aufweist, von denen die verpackte Schlauchraupe (28) erfaßbar und nach Entfernen des Raffrohrs (2o) seitlich
aus der Verpackungsvorrichtung (3o) herausnehmbar ist.

26. Vorrichtung nach einem der Ansprüche 21 bis 25 g e -
k e n n z e i c h n e t  d u r c h  ein in den Verschiebeweg der zu verpackenden Schlauchraupe (28)
vorübergehend einschwenk- oder einschiebbares Widerlager für das Zusammenpressen der Schlauchraupe beim
Einfahren des Raffrohrs (2o) in die Verpackungsvorrichtung (3o).

27. Vorrichtung zur Durchführung des Verfahrens nach
Anspruch 6 oder 7 für das Verpacken hohlzylindrischer
Gegenstände, g e k e n n z e i c h n e t  d u r c h
ein das Verpackungsmaterial (262) nach Durchlaufen
eines Quetschwalzenpaares (264) über sich hinwegführendes und über das Verpackungsmaterial hinweg von
außen zentriertes und gegen Axialbewegung in Ablaufrichtung gehaltenes Führungsrohr (266) von geringfügig
größerem Durchmesser als die zu verpackenden Gegenstände (274) und ein jeweils einen zu verpackenden
Gegenstand tragendes, in das Führungsrohr (266) einfahrbares Tragrohr (Dorn 276), durch welches während
des Einfahrens in das Führungsrohr (266) Druckluft in
solchem Ausmaß in das Innere des sich mit seinem
Öffnungsende dichtend gegen die Stirnseite des zu
verpackenden Gegenstandes (274) anliegenden Verpackungsmaterials einblasbar ist, daß sich dieses über den
Außendurchmesser des Führungsrohrs (266) hinaus ausdehnt und beim weiteren Einfahren des Führungsrohrs
von selbst über die Vorderkante (27o) des Führungsrohrs (266) auf den zu verpackenden Gegenstand abläuft.

28. Vorrichtung nach Anspruch 27, d a d u r c h   g e -
k e n n z e i c h n e t , daß die Vorderkante des
Führungsrohrs (266) eine im Querschnitt abgerundete
Ringwulst (27o) trägt.

0075933

Fig. 1

Fig. 3

Fig. 2

0075933

Fig. 4

Fig. 5

Fig. 6

Fig. 7

4/7

0075933

Fig.9

Fig.8

76  220  224  228  216  218  226  194  192  214  194  10

76  200  210  202  204  210  200  206  208  198  196  198  194  194  192  216  218  220  228  226  224  190  10

Fig. 10

Fig. 11

Fig. 12

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| | --- | | A 22 C 13/00 |
| A | DE-A-2 511 770 (KOLCROSS) | 1,8,20 ,22,23 | B 65 B 11/58 |
| | * Seite 3, Zeile 25 - Seite 5, Zeile 28 * | | |
| | --- | | |
| A | DE-A-2 010 106 (UNION CARBIDE) * Seite 6, Zeile 5 - Seite 7, Zeile 1 * | 1,2 | |
| | --- | | |
| A | DE-B-1 217 238 (CONFUGA) * Insgesamt * | 1 | |
| | --- | | |
| A | EP-A-0 025 923 (KOLLROSS) | 1,3,6, 13,14, 16,20, 24,25 | |
| | * Seite 6, Zeile 13 - Seite 13, Zeile 33 * | | RECHERCHIERTE SACHGEBIETE (Int. Cl. ³) |
| | --- | | |
| A | CH-A- 508 350 (ZWICKY) * Insgesamt * | 1,9,17 ,18 | A 22 C B 65 B |
| | --- | | |
| A | CH-A- 593 173 (ZWICKY) * Insgesamt * | 1,9,17 | |
| | --- | | |
| A | CH-A- 513 041 (KOLLROSS) | | |
| | --- | | |
| A | FR-A-2 162 806 (CHERIO) | | |
| | ----- | | |

Der vorliegende Recherchenbericht wurde für alle Patentansprüche erstellt.

| Recherchenort | Abschlußdatum der Recherche | Prüfer |
|---|---|---|
| DEN HAAG | 06-01-1983 | DE LAMEILLIEURE D. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82